# EUROPÄISCHE PATENTSCHRIFT

(11) **EP 3 095 544 B1**
(45) Veröffentlichungstag und Bekanntmachung des Hinweises auf die Patenterteilung: **19.09.2018**
(21) Anmeldenummer: 15001526.1
(22) Anmeldetag: 21.05.2015
(51) Int. Cl.: B23K 1/00, B23K 1/06, B23K 1/20, B23K 3/08, C04B 37/00, C04B 37/02, B23K 103/18, B23K 103/00

(54) **VERFAHREN ZUM VERBINDEN VON TEILEN AUS SCHWER LÖTBAREN MATERIALIEN**
METHOD OF JOINING PARTS MADE OF MATERIALS THAT ARE DIFFICULT TO SOLDER
PROCÉDÉ DE LIAISON DE PIÈCES EN MATÉRIAUX QUI SONT DIFFICILES A BRASER

(43) Veröffentlichungstag der Anmeldung: 23.11.2016
(73) Patentinhaber: Airbus Defence and Space GmbH, 82024 Taufkirchen (DE)
(72) Erfinder: Haas, Catherine, 88718 Daisendorf (DE); Lang, Tanja, 88709 Meersburg (DE); Haberer, Udo, 88410 Bad Wurzach (DE); Funke, Matthias, 88677 Markdorf (DE); Wilhelmi, Christian, 85635 Höhenkirchen-Siegertsbrunn (DE)
(74) Vertreter: Schicker, Silvia

(56) Entgegenhaltungen:
- GB-A- 1 371 738
- JP-A- S57 188 833
- US-A1- 2005 051 607
- US-A1- 2015 041 187

## Beschreibung

Die Erfindung betrifft ein Verfahren zum Verbinden eines ersten Teils aus einem schwer lötbaren Material, insbesondere einer Keramik, einer Glaskeramik oder einem Glas, mit einem zweiten Teil.

Die Verbindung von Teilen, von denen zumindest eines aus einem keramischen Material, insbesondere einer monolithischen Keramik, oder Glas oder einer Glaskeramik, wie Zerodur, besteht, stellt hohe Ansprüche an die Qualität der Verbindungsmethodik. Diese Materialien stellen schwer lötbare Materialien dar.

In der Regel werden zu deren Verbindung Klebstoffe eingesetzt. Die Verwendung von Klebstoffen bringt jedoch das Problem mit sich, dass die dadurch erreichte Dimensionsstabilität des durch Klebung erzeugten Verbunds nicht ausreicht, um dimensionsstabile Strukturen für Raumfahrtanwendungen herzustellen. Klebstoffe weisen ferner den Nachteil auf, dass diese ausgasen können, was in den genannten Raumfahrtanwendungen ebenfalls unerwünscht ist.

Ferner sind Hartlöt-Verfahren bekannt, um z.B. keramische Materialien mit ähnlichen oder unterschiedlichen Materialeigenschaften zu verbinden. Dabei werden üblicherweise Temperaturen von mehr als 800°C für den Verbindungsprozess benötigt. Hieraus können sich Probleme im Hinblick auf den thermischen Ausdehnungskoeffizienten zwischen dem verwendeten Lotmaterial und der Keramik der Verbindungspartner ergeben, wenn der Lötprozess nicht korrekt ausgeführt ist.

Um die Verbindung zweier Teile durch ein Lötverfahren vornehmen zu können, welches mit geringeren Temperaturen auskommt, um Probleme aufgrund der Effekte von thermischen Ausdehnungskoeffizienten zu minimieren und die Belastung für die zu verbindenden Teile möglichst gering zu halten, können sog. Cerasolzerlote (kurz: Cerasolzer) verwendet werden. Diese weisen ein hohes Haftvermögen zu schwer lötbaren Materialien auf. Das Haftvermögen einer Lötverbindung mit Cerasolzer hängt einerseits von den Eigenschaften der Lotlegierung ab. Cerasolzer Lote enthalten kleine Anteile von Elementen wie Zn, Ti, Si, AI, Be, Sb und die Seltenerdemetalle, die zu Sauerstoff eine gute Affinität haben. Diese Seltenerdemetalle setzen sich während des Verbindungsverfahrens mit Sauerstoff zusammen und bilden Oxide, die sich mit der Oberfläche von Glas, Keramik, Glaskeramiken usw. chemisch verbinden. Andererseits ist das Einbringen von Hitze nicht genug, um eine Benetzung der Oberfläche zu erreichen. Neben der Wärme erfolgt daher die zusätzliche Einbringung von starken Ultraschall-Vibrationen. Allerdings entspricht die Haftung der Verbindung zweier mit Lot benetzter Oberflächen nicht den für Raumfahrtanforderungen erforderlichen Kriterien.

Dokument GB 1 371 738 A beschreibt ein Verfahren zum Verlöten schwer lötbarer Materialien gemäß dem Oberbegriff des Anspruchs 1. Hierbei wird ein geschmolzenes Lot mit einer speziellen chemischen Zusammensetzung jeweils auf die Lötstellen der miteinander zu verbindenden schwer lötbaren Materialen aufgebracht, während auf die Kontaktstelle zwischen dem schwer lötbaren Material und dem Lot oder auf das Lot selbst mittels Ultraschallvibration eingewirkt wird. Zum Verlöten zweier schwer lötbarer Materialen werden dann deren mit dem Lot versehenen Lötstellen in Kontakt gebracht und unter Wärmeeinwirkung miteinander verbunden, wobei die Löttemperatur ≤ 180° C beträgt.

Aus Dokument JP S57 188833 A ist es bekannt, die Stärke einer Lötverbindung zu erhöhen, indem kurz vor dem Verbinden zweier Materialen die Oxidoberfläche eines auf einem der Materialen aufgebrachten, geschmolzenen Lots entfernt wird.

Dokument US 2015/0041187 A1 zeigt die Herstellung eines Bauteils, bei dem ein metallischer Schaltkreis und eine metallische Basisplatte auf gegenüberliegenden Oberflächen eines keramischen Substrats aufgebracht sind. Eine Verbindung der Einzelteile zu dem Bauteil kann durch Weichlöten oder durch Hartlöten erzeugt werden. Lediglich der Hartlötvorgang ist in Dokument US2015/0041187 A1 näher beschrieben.

Dokument US 2005/0051607 A1 beschreibt nanostrukturiert weich- oder hartverlötete Verbindungen, die unter Verwendung von reaktiven Multilagenfolien hergestellt werden. Diese reaktiven Multilagenfolien dienen als lokale Wärmequellen zum schnellen Schmelzen des Lots oder der Hartlötschicht, um die gewünschte Lotverbindung herzustellen.

Es ist Aufgabe der vorliegenden Erfindung, ein funktional verbessertes Verfahren zur Verbindung von Teilen, von denen zumindest eines aus einem keramischen Material oder Glas oder einer Glaskeramik besteht, anzugeben, das die zu verbindenden Teile strukturell möglichst wenig beansprucht und gleichzeitig eine hohe Dimensionsstabilität der erzeugten Struktur ermöglicht.

Diese Aufgabe wird gelöst durch ein Verfahren gemäß den Merkmalen des Anspruches 1. Vorteilhafte Ausgestaltungen ergeben sich aus den abhängigen Ansprüchen.

Es wird ein Verfahren zum Verbinden eines ersten Teils aus einem schwer lötbaren Material, insbesondere einer Keramik, einer Glaskeramik oder einem Glas, mit einem zweiten Teil vorgeschlagen, bei dem die folgenden Schritte durchgeführt werden:
a) Benetzung einer mit dem zweiten Teil zu verbindenden, ersten Fläche des ersten Teils mit einem ersten Lot und Verbindung des ersten Lots mit der ersten Fläche des ersten Teils durch Einbringung von Wärme und Ultraschallenergie;
b) Benetzung einer mit dem ersten Teil zu verbindenden, zweiten Fläche des zweiten Teils mit einem zweiten Lot;
c) Bearbeitung der mit dem zweiten Lot zu verbindenden Oberfläche des ersten Lots zur Entfernung einer in Schritt a) erzeugten Oxidschicht; optional kann in Schritt c) zusätzlich eine Bearbeitung der mit dem ersten Lot zu verbindenden Oberfläche des zweiten Lots zur Entfernung einer in Schritt b) erzeugten Oxidschicht durchgeführt werden;
d) Herstellen einer Verbindung der mit dem ersten Lot benetzten ersten Fläche des ersten Teils und der mit dem zweiten Lot benetzten zweiten Fläche des zweiten Teils durch Inkontaktbringen der ersten und der zweiten Fläche zu einer Einheit;
e) Durchführen eines Temperaturschritts, bei dem die Einheit einer Temperatur innerhalb eines vorgegebenen Temperaturbereichs, der eine untere Grenztemperatur und eine obere Grenztemperatur aufweist, ausgesetzt wird, wobei die obere Grenztemperatur kleiner als 800°C ist.

Zumindest als erstes Teil wird ein Teil aus einem schwer lötbaren Material, insbesondere einer Keramik, bevorzugt einer monolithischen Keramik, wie Siliziumcarbid, Siliziumnitrid oder Alumuniumnitrid, einer Glaskeramik, wie Zerodur, oder einem Glas verarbeitet. Optional kann auch als zweites Teil ein Teil aus einem der oben genannten schwer lötbaren Materialen verarbeitet werden.

Eine monolithische Keramik kann beispielsweise aus Siliziumcarbid (SiC), eine zur Gruppe der Carbide gehörende chemische Verbindung aus Silizium und Kohlenstoff, verwendet werden. Siliziumcarbid weist eine hohe Steifigkeit und Härte sowie eine geringe thermische Ausdehnung auf. Siliziumcarbid weist darüber hinaus eine hohe chemische sowie eine hohe thermische Stabilität auf. Die mechanischen Eigenschaften im Hinblick auf eine Biegefestigkeit und Zähigkeit verändern sich mit der Temperatur kaum. Als monolithische Keramik kann ebenso Siliziumnitrid verwendet werden. Siliziumnitrid ist eine chemische Verbindung, die aus den Elementen Silizium und Stickstoff besteht, mit der Formel Si₃N₄. Es weist eine im Vergleich zu Siliziumcarbid hohe Festigkeit und für monolithische Keramiken hohe Zähigkeit, einen niedrigen Wärmeausdehnungskoeffizienten und ein vergleichsweise kleines Elastizitätsmodul auf und eignet sich daher besonders für Thermoschock-beanspruchte Bauteile. Ebenso kann als Material des ersten Teils, und optional des zweiten Teils, Zerodur verwendet werden. Zerodur ist ein glaskeramischer Werkstoff, der durch kontrollierte Volumenkristallisation hergestellt wird. Zerodur enthält eine kristalline Phase und eine Restglasphase, durch die ein äußerst geringer Ausdehnungskoeffizient, gute Materialhomogenität, chemische Beständigkeit, Langzeitstabilität und gering schwankende mechanische Eigenschaften erzielt werden.

Das vorliegende Verfahren zum Verbinden des ersten und des zweiten Teils nutzt nicht die Technologie des Hartlötens (sog. Brazing), sondern vielmehr die Methodik des Weichlötens, bei der aufgrund der wesentlich kleineren Temperaturen weniger Spannungen in die Verbindungspartner, d.h. das erste und das zweite Teil, eingebracht werden.

Diese an sich nicht oder nur schwer durch Weichlötung verbindbaren Materialien werden dadurch durch Lötung verbindbar, das zumindest in Schritt a) das Herstellen der Verbindung des ersten Lots mit dem ersten Teil durch Einbringung von Wärme und Ultraschallenergie erfolgt, wodurch eine gute Haftung zwischen dem ersten Teil und dem ersten Lot ermöglicht wird. Für den Fall, dass auch das zweite Teil aus einem schwer lötbaren Material, erfolgt das Herstellen der Verbindung des zweiten Lots mit dem zweiten Teil in entsprechender Weise durch Einbringung von Wärme und Ultraschallenergie auch in Schritt b).

Auf diese Weise werden die erste, und optional die zweite Fläche des ersten bzw. zweiten Teils aus Keramik oder Zerodur verzinnt, so dass in dem nachfolgenden Temperaturschritt eine Lotverbindung der beiden Flächen erfolgen kann. Damit die flächige oder störstellenfreie Lotverbindung zwischen dem ersten und dem zweiten Lot überhaupt möglich ist und die erforderlichen Hafteigenschaften aufweist, erfolgt ein Entfernen der Oxidschichten, die sich beim Benetzen des ersten und, optional zweiten, Lots auf die jeweilige erste und zweite Fläche des ersten bzw. zweiten Teils selbst bilden. Die Bearbeitung der jeweiligen Oberfläche des ersten und/oder zweiten Lots zur Entfernung der in Schritt a) und/oder b) erzeugten Oxidschicht kann z.B. durch Schleifen oder Fräsen erfolgen. Es sind natürlich auch andere Abtragverfahren möglich.

Ein Vorteil der beschriebenen Vorgehensweise besteht darin, dass das mit hohen Temperaturen von mehr als 800°C verbundene Hartlöten (Brazing) vermieden werden kann. Dadurch werden geringere thermische Spannungen in den Bereich der Verbindungsfläche eingebracht. Für kleinere Teile und nicht strukturelle Verbindungen, insbesondere bei der Verwendung des Verbundteils als Raumfahrtkomponente lässt sich dadurch eine hocheffektive Verbindungsmethode bereitstellen. Die Verbindungsstruktur, d.h. die aus dem ersten und dem zweiten Teil gebildete Einheit, weist dabei gegenüber der Verbindung unter Zuhilfenahme von Klebstoffen, eine wesentlich bessere Dimensionsstabilität auf.

Als erstes und/oder als zweites Lot wird gemäß einer zweckmäßigen Ausgestaltung ein Lot verwendet, das Anteile von einem oder mehreren Seltenerdemetallen enthält. Beispielsweise kann als erstes und/oder als zweites Lot Cerasolzer, auch als Cerasolzer-Lot bezeichnet, verwendet werden. Cerasolzer ist von der Herstellung elektronischer Komponenten bekannt, um elektrische Materialien zu kontaktieren oder um Glas oder metallisierte Gläser zu kontaktieren. Cerasolzer ist ein eutektisches Lot, das flussmittelfrei, korrosionsfrei und bei Temperaturen zwischen 150°C und 300°C verarbeitbar ist. Es weist Benetzungseigenschaften auf, die für Glas, Glaskeramiken und Keramiken geeignet sind.

Wie eingangs bereits beschrieben wurde, ist es vorteilhaft, bei dem Verbindungsvorgang des ersten und zweiten Teils mit geringstmöglichen Temperaturen zu arbeiten. Es ist daher zweckmäßig, wenn Schritt a) mit Temperaturen von weniger als 300°C, insbesondere weniger als 260°C, und weiter bevorzugt weniger als 200°C durchgeführt wird. Dieser Temperaturbereich kann durch Auswahl eines geeigneten Lots erzielt werden.

Es ist weiter zweckmäßig, wenn in Schritt a), und optional b), das erste, und optional das zweite, Lot auf der ersten bzw. zweiten Fläche geschmolzen wird und das geschmolzene Lot, z.B. mit einer Ultraschall-Lötpistole, zur Adhäsion mit dem Material des ersten bzw. zweiten Teils gebracht wird, wobei jeweilige Oxidschichten durch Ultraschall auf der ersten bzw. zweiten Fläche entfernt werden. Zur Entfernung der jeweiligen Oxidschichten wird das sog. "Ultrasonic Cavitation Phenomenon" (deutsch: Ultraschall-Kavitationsphänomen) genutzt, durch das oxidierte Schichten auf der ersten bzw. zweiten Fläche auf einfache Weise entfernt und diese gleichzeitig gereinigt werden. Mittels eines intensiven Ultraschallbündels werden dabei Mikro-Vibrationen erzeugt, welche einen Bürsteneffekt haben, wodurch eine vollständige Entfernung der Oxidschicht zur unmittelbaren Benetzung mit dem Lot möglich ist. Hieraus ergibt sich der Vorteil, dass keinerlei Flussmittel erforderlich ist, wenn das Lot auf die erste bzw. zweite Fläche aufgebracht wird. Dadurch wird in Kombination mit der oben beschriebenen Verzinnung ein Weichlöten aus Aluminium, Glas, Keramiken, schwer zu lötenden Metallen (wie rostfreiem Edelstahl, Titan, Metalloxiden) auf einfache Weise ermöglicht.
Es kann zudem zweckmäßig sein, wenn vor dem Schritt der Einbringung von Wärme und Ultraschallenergie zur Verbindung des ersten Lots mit dem ersten Teil, und optional des zweiten Lots mit dem zweiten Teil, eine vorherige Erwärmung des ersten Teils bzw. des zweiten Teils erfolgt. Dies kann beispielsweise mittels einer temperatureinstellbaren Heizplatte realisiert werden.

Zum Herstellen der Verbindung in Schritt d) werden gemäß der Erfindung das erste und das zweite Teil bezüglich ihrer ersten und zweiten Fläche planparallel ausgerichtet bevor die erste und die zweite Fläche mit einer Kraft in einem vorgegebenen Kraftbereich, insbesondere 0,05 N/mm² bis 0,5 N/mm², gegeneinander gedrückt werden. Dies kann z.B. mithilfe einer Bearbeitungseinrichtung erfolgen. Ferner ist es mit der Bearbeitungseinrichtung möglich, die erste und die zweite Fläche über deren gesamte Berührungsfläche mit einer einheitlichen Kraft zu beaufschlagen. Hierdurch kann die Zuverlässigkeit der mechanischen Verbindung zwischen erstem und zweitem Teil optimiert werden.

Zwischen die erste und die zweite Fläche wird gemäß der Erfindung ein duktiles Material als Abstandshalter eingebracht, durch den ein vorgegebener Abstand, insbesondere zwischen 0,1mm bis 0,3 mm, zwischen der ersten und der zweiten Fläche nach dem Erkalten des ersten und des zweiten Lots erzeugt wird. Hierdurch kann die Festigkeit und Planparallelität der Verbindung optimiert werden.
Gemäß einer ersten Ausgestaltungsvariante kann in Schritt e) der Schritt des Dampfphasenlötens (teilweise auch Kondensationslötverfahren genannt) durchgeführt werden. Hierzu wird die Einheit aus miteinander verbundenem ersten und zweiten Teil in eine Dampfphasenlötvorrichtung eingebracht, welche zur Erwärmung der Einheit die bei der Phasenänderung eines Wärmeträgermediums vom gasförmigen in den flüssigen Zustand freigesetzte Kondensationswärme nutzt. Dabei findet eine Kondensation an der Oberfläche der Einheit statt, bis die gesamte Einheit die Temperatur des Dampfes erreicht hat. Siedet die Flüssigkeit (das Wärmeträgermedium), bildet sich über ihr eine gesättigte, chemisch inerte Dampfzone, deren Temperatur mit dem Siedepunkt der Flüssigkeit weitgehend identisch ist, so dass sich eine optimale Schutzatmosphäre ausbildet und Oxidationen im Dampfphasenlötprozess ausgeschlossen werden. Als Wärmeträgermedium kann beispielsweise Perfluorpolyether (PFPE) eingesetzt werden. Die Wärmeübertragung in einer Dampfphasenlötvorrichtung ist schnell und geometrieunabhängig. Insbesondere entstehen keine Kaltzonen im Schatten größerer Bauteile. Durch die genau definierte Löttemperatur und die gleichförmige Erwärmung ist keine Überhitzung der Bauteile möglich.
Gemäß einer anderen Ausgestaltungsvariante werden die erste und die zweite Fläche in Schritt e) der Temperatur lokal ausgesetzt. Hierzu kann in einem Schritt c1) der nach Schritt c) und vor Schritt d) durchgeführt wird, eine reaktive HilfsSchicht, die nach einer gesteuerten Aktivierung eine sich selbsterhaltende exotherme Reaktion erfährt, zwischen die erste und die zweite Fläche eingebracht werden, so dass in Schritt d) die erste und die zweite Fläche mit der Hilfsschicht verbunden werden.

In Schritt e) kann dann eine Aktivierung der Hilfsschicht durch Einbringung von Energie erfolgen, wodurch Materialien der Hilfsschicht chemisch reagieren und aufgrund ihrer Reaktion thermische Energie zum Schmelzen des ersten und des zweiten Lots erzeugt wird. Dadurch, dass die thermische Energie durch die Hilfsschicht erzeugt wird, erfolgt dann eine lediglich lokale Erwärmung des ersten und des zweiten Lots, wodurch ein besonders schonender Verbindungsvorgang hinsichtlich des Einbringens von Temperatur gewährleistet ist. Die Aktivierung der Hilfsschicht durch Einbringung von Energie kann optisch, elektrisch oder thermisch erfolgen.

Die Hilfsschicht kann als erstes Material Aluminium und als zweites Material Nickel umfassen. Eine derartige Hilfsschicht ist beispielsweise unter der Bezeichnung NanoFoil bekannt.

Die Erfindung wird nachfolgend näher anhand der Beschreibung von Ausführungsbeispielen in der Zeichnung erläutert:
- Fig. 1: eine schematische Darstellung zweiter übereinander angeordneter Teile, auf deren zu verbindenden Flächen vorbereitend ein Lot durch ein Weichlötverfahren aufgebracht ist,
- Fig. 2: eine Bearbeitungsvorrichtung, durch welche eine Verbindung der zu verbindenden, verzinnten Teile ermöglicht wird,
- Fig. 3: eine schematische Darstellung einer Dampfphasenlötvorrichtung, und
- Fig. 4: aufeinanderfolgende Verarbeitungsschritte zur Herstellung einer Verbindung von Teilen aus einem nichtlötbaren Material durch Weichlöten.

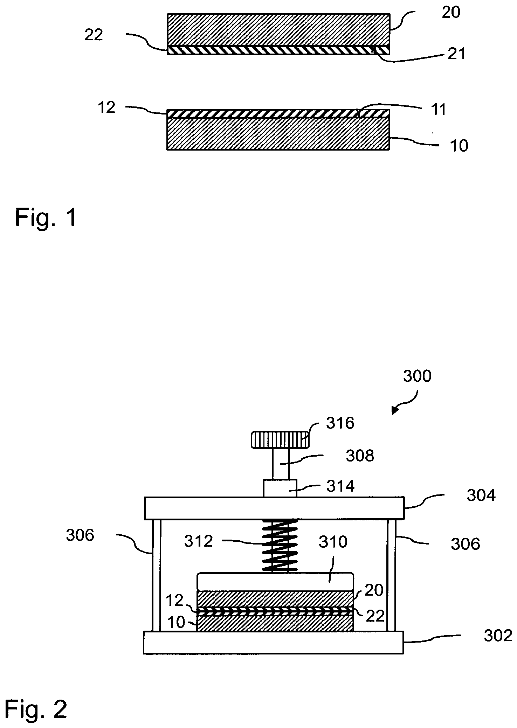

Fig. 1 zeigt eine schematische Darstellung zweier miteinander zu verbindender Teile 10, 20. Der Einfachheit halber sind das erste und das zweite Teil 10, 20 als Flächenelemente ausgeführt. Es versteht sich, dass das hier beschriebene Verfahren jedoch auch bei komplexer ausgebildeten Formen zur Anwendung gelangen kann.

Vorzugsweise wird das nachfolgend beschriebene Verfahren zur Herstellung von Raumfahrtkomponenten eingesetzt, an welche hohe Anforderungen hinsichtlich der Dimensionsstabilität und der dauerhaften Qualität der Verbindung gestellt werden. Aus genannten Gründen bestehen das erste und das zweite Teil meist aus keramischen oder glaskeramischen Materialien, wie z.B. monolithischen Keramiken oder Zerodur. Grundsätzlich eignet sich das Verfahren jedoch auch zur Verbindung, wenn lediglich eines der beiden Teile aus einem keramischen Material besteht. Eine monolithische Keramik oder Zerodur weist die Eigenschaft auf, dass diese von Haus aus schwer mittels Weichlötverfahren verarbeitbar sind. Da das Weichlötverfahren gegenüber dem Hartlöten jedoch mit wesentlich geringeren Temperaturen und damit geringeren Belastungen für die Verbindungspartner durchgeführt werden kann, wurde das nachfolgend beschriebene Verfahren entwickelt, mit dem aus Keramik bestehende Teile durch ein Weichlötverfahren verbunden werden können.

Als Keramiken für das erste und/oder das zweite Teil kommen beispielsweise Siliziumcarbid (SiC) verwenden oder Siliziumnitride (Si₃N₄) zur Anwendung. Das erste und/oder das zweite Teil 10, 20 können alternativ aus Zerodur bestehen.

Wie in Fig. 1 schematisch dargestellt ist, sollen das erste und das zweite Teil 10, 20 im Bereich einer ersten Fläche 11 des ersten Teils 10 und einer zweiten Fläche 21 des zweiten Teils 20 miteinander verbunden werden. Zur Durchführung eines Weichlötvorgangs erfolgt eine Verzinnung der ersten und der zweiten Fläche 11, 21. Hierzu wird auf die erste Fläche 11 ein erstes Lot 12 und auf die zweite Fläche 21 ein zweites Lot 22 mit einem Anteil an Seltenerdemetallen, z.B. Cerasolzer, aufgebracht, geschmolzen und durch Einbringung von Ultraschallenergie mit der ersten Fläche 11 bzw. der zweiten Fläche 21 verbunden. Das Schmelzen des ersten bzw. zweiten Lots 12, 22 erfolgt mit Temperaturen zwischen 150°C und 300°C, abhängig vom gewählten Lot. Zweckmäßigerweise wird das Lot derart gewählt, dass das Schmelzen mit einer Temperatur von weniger als 300°C, insbesondere weniger als 260°C, und weiter bevorzugt weniger als 200°C möglich ist, wobei die Temperatur durch das eingesetzte Lot bestimmt wird.

Beim Aufbringen und Schmelzen des Lots 12, 22 auf die erste bzw. zweite Fläche 11, 21 erfolgt eine Entfernung von jeweiligen Oxidschichten auf der ersten bzw. zweiten Fläche 11, 21, indem durch ein intensives Ultraschallbündel Mikrovibrationen erzeugt und ein Bürsteneffekt erzielt wird. Nachdem die Oxidschicht vollständig entfernt wurde, kann das Lot 12, 22 sich mit der ersten bzw. zweiten Fläche 11, 21 des ersten bzw. zweiten Teils 10, 20 verbinden. Auch aufgrund dessen ist die Verwendung eines zusätzlichen Flussmittels entbehrlich.

Damit die Lotverbindung zwischen dem ersten und dem zweiten Lot 12, 22 überhaupt möglich ist und die erforderlichen Hafteigenschaften aufweist, erfolgt ein Entfernen von Oxidschichten, die sich beim Benetzen des ersten und zweiten Lots 12, 22 mit der jeweiligen ersten und zweiten Fläche 11, 21 des ersten bzw. zweiten Teils 10, 20 auf den Oberflächen des ersten bzw. zweiten Lots 12, 22 selbst bilden. Die Bearbeitung der jeweiligen Oberfläche des ersten und/oder zweiten Lots zur Entfernung der Oxidschichten kann, insbesondere nach dem Erkalten des ersten und/oder zweiten Lots, z.B. durch Schleifen oder Fräsen erfolgen, wodurch gleichzeitig eine planparallele Oberfläche für den späteren Verbindungsprozess der Lote 12, 22 geschaffen wird.

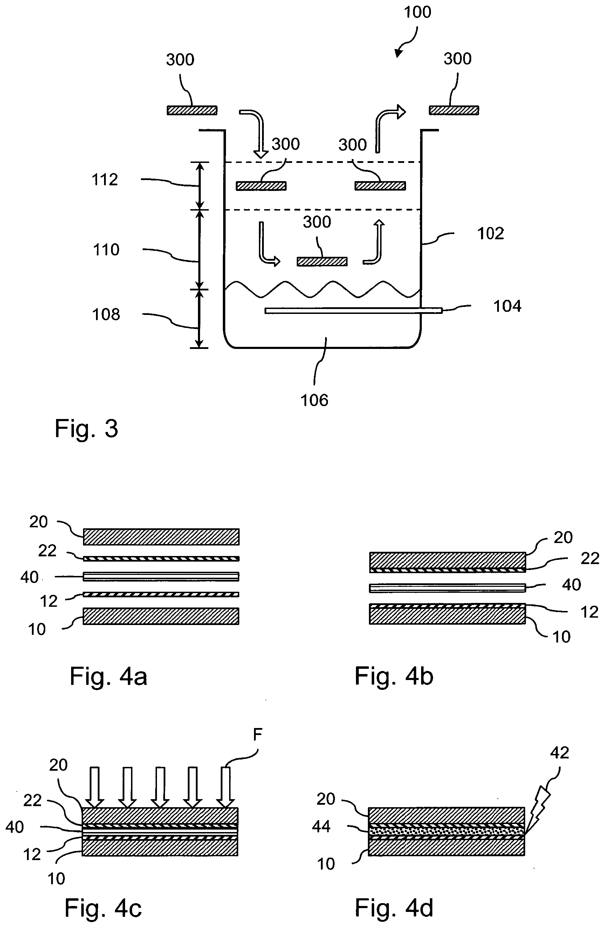

Um einen gleichmäßigen Abstand der Teile 10, 20 nach dem Verbinden und Auskühlen zwischen 0,1mm und 0,3 mm sicherzustellen, wird gemäß der Erfindung zwischen das erste und das zweite Teil 10, 20 ein duktiles Material als Abstandshalter eingebracht. Hierdurch wird eine planparallele Verbindung zwischen den Teilen 10, 20 während des Lötvorganges sichergestellt, was für die flächige und störstellenfreie Verbindung sorgt.
Anschließend erfolgt die Herstellung einer Verbindung im Bereich der ersten und der zweiten Fläche 11, 21. Hierzu wird vorzugsweise eine wie in Fig. 3 schematisch dargestellte Bearbeitungseinrichtung 300 genutzt, damit eine planparallele Verbindung zwischen dem ersten und dem zweiten Teil 10, 20 und eine gleichmäßige Druckbeaufschlagung über die gesamte Verbindungsfläche hinweg ermöglicht wird.
Die Bearbeitungseinrichtung 300, die in Fig. 2 schematisch dargestellt ist, umfasst eine Grundplatte 302, welche über zwei oder mehrere Verbindungsstützen 306 mit einer planparallel angeordneten Deckplatte 304 verbunden ist. Das erste Teil 10 wird mit der nicht zu verbindenden Seite (d.h. der der ersten Fläche gegenüberliegenden Seite) auf die Grundplatte 302 aufgelegt. Dadurch weist die zu verbindende erste Fläche 11 in Richtung der Deckplatte 304. Das zweite Teil 20 wird, mit seiner zweiten Fläche 21 in Richtung des ersten Teils 10 weisend, auf dieses aufgelegt. Eine Druckplatte 310, welche zweckmäßigerweise zumindest eine Fläche aufweist, die der zu verbindenden Fläche entspricht, grenzt an die Rückseite des zweiten Teils 20 an. Die Druckplatte 310 ist mechanisch mit einem durch die Deckplatte 304 ragenden und in Axialrichtung verschiebbaren Schaft 308 verbunden. Zwischen der Druckplatte 310 und der Deckplatte 304 ist ein Federelement 312 angeordnet. Dabei drückt das Federelement 312 die Druckplatte 310 gleichmäßig gegen das zweite Teil 20, so dass eine gleichförmige Kraft im Bereich der zu verbindenden ersten und zweiten Fläche 11, 21 erzielt ist. Ein den Schaft 308 umgebendes Feststellelement 314 ermöglicht es, die Druckplatte 310 durch Ziehen an einem Eingriffselement 316 von der zweiten Platte 20 zu entfernen und dabei den Schaft 308 entgegen der Federkraft zu halten, so dass keine in Richtung der Grundplatte 302 wirkende Kraft durch die Druckplatte 310 auf die Einheit 30 ausgeübt werden kann. Hierdurch kann die Einheit 30 aus der Bearbeitungsvorrichtung entnommen werden bzw. neue Teile 10, 20 in die Bearbeitungseinheit eingelegt werden.

Die derart vorbereitete Einheit, die nachfolgend mit dem Bezugszeichen 30 versehen ist, kann nun zusammen mit der Bearbeitungseinrichtung 300 in eine Dampfphasenlötvorrichtung 100, wie diese in Fig. 3 dargestellt ist, eingebracht werden. Nach dem Durchlaufen der Dampfphasenlötvorrichtung 100 sind die erste und die zweite Lotschicht 12, 22 miteinander stoffflüssig verbunden.

Fig. 3 zeigt eine prinzipiell bekannte Dampfphasenlötvorrichtung 100, mit deren Hilfe eine in der Bearbeitungseinrichtung 300 vorbereitete Einheit 30 einem Temperaturschritt zur Durchführung des Weichlötvorgangs unterzogen wird. Die Dampfphasenlötvorrichtung 100 umfasst einen Behälter 102, z.B. aus einem rostfreien Edelstahl. In dem Behälter 102 ist als Wärmeträgermedium eine chemisch inerte Flüssigkeit 106. Die chemisch inerte Flüssigkeit 106 nimmt dabei in Höhenrichtung des Behälters 102 einen ersten Bereich 108 ein. Durch ein Heizelement 104, das von der chemisch inerten Flüssigkeit 106 vollständig umgeben ist, wird die chemisch inerte Flüssigkeit 106 zum Kochen gebracht. Dadurch bildet sich ein mit 110 bezeichneter zweiter Bereich einer primären Dampfschicht. Darüber liegend ist ein dritter Bereich 112, der eine sekundäre Dampfschicht ausbildet. Als Wärmeträgermedium kann beispielsweise Perfluorpolyether (PFPE) eingesetzt werden. Die Dampfphasenlötvorrichtung 100 nutzt zur Erwärmung der Einheit 30, die noch in der Bearbeitungseinrichtung 300 angeordnet ist, die bei der Phasenänderung des Wärmeträgermediums 106 vom gasförmigen in den flüssigen Zustand freigesetzte Kondensationswärme. Dabei findet eine Kondensation an der Oberfläche der Einheit 30 statt, bis die gesamte Einheit die Temperatur des Dampfes erreicht hat.

Wird die Einheit 30 nun mit der Bearbeitungseinrichtung 300, wie dies in Fig. 3 dargestellt ist, über die sekundäre Dampfschicht des dritten Bereichs 112 in die primäre Dampfschicht des zweiten Bereichs 110 für eine vorbestimmte Zeit eingebracht, in dem das Wärmeträgermedium (die chemisch inerte Flüssigkeit 106) im gasförmigen Zustand vorliegt, deren Temperatur mit dem Siedepunkt mit der chemisch inerten Flüssigkeit 106 im Wesentlichen identisch ist, so erfolgt eine schnelle und geometrieunabhängige Wärmeübertragung auf die Einheit 30. Dadurch werden die Einheit 30 bzw. die Lotschichten 12, 22 mit einer genau definierten Löttemperatur, die von der Flüssigkeit bzw. dem gewählten Wärmeträgermedium abhängt, beaufschlagt. Gleichzeitig ist sichergestellt, dass die Einheit 30 sich gleichförmig erwärmt und keine Überhitzung der Bauteile erfolgt. Gleichzeitig hat sich, solange die Einheit 30 sich in dem zweiten Bereich 110 befindet, eine optimale Schutzatmosphäre ausgebildet, so dass Oxidationen im Dampfphasenlötprozess ausgeschlossen werden können. Darüber hinaus ist die Anforderung an Vorwärmzonen geringer. Nach dem Entnehmen der Einheit 30 aus dem Behälter sind die Lotschichten miteinander verbunden. Anschließend kann die Einheit 30 auch aus der Bearbeitungsvorrichtung 300 entnommen werden.

Fig. 4 zeigt eine Ausgestaltung, bei der die Erwärmung der Lotschichten 12, 22 mit Hilfe einer zwischen den Lotschichten 12, 22 angeordneten Hilfsschicht 40 realisiert wird. Als Hilfsschicht 40 kann z.B. eine sog. NanoFoil aus einer Vielzahl an Aluminium- und Nickelschichten genutzt werden. Fig. 4a zeigt die Reihenfolge, in der das erste Teil 10, das erste Lot 12, die Hilfsschicht 40, das zweite Lot 22 und das zweite Teil 20 übereinander angeordnet und verbunden werden. Gemäß Fig. 4b wird zunächst, wie bereits beschrieben, das erste Lot 12 auf die erste Fläche 11 des ersten Teils 10 durch Einbringen von Ultraschall aufgebracht. In entsprechender Weise wird das zweite Lot 22 auf die zweite Fläche 21 des zweiten Teils 20 durch Einbringen von Wärme und Ultraschall aufgebracht. Die Oberflächen der ersten Lotschicht 12 und der zweiten Lotschicht 22, welche mit der Schichtenfolge 40 verbunden werden, werden ferner durch einen geeigneten Bearbeitungsprozess flach, glatt und sauber gemacht, wodurch die unerwünschten Oxidschichten 12, 22 entfernt werden. Die so vorbereiteten ersten und zweiten Teile 10, 20 werden, mit ihren Lotschichten 12, 22 einander zugewandt, gegenüberliegend angeordnet. Dazwischen wird die Hilfsschicht 40 vorgesehen.

Gemäß Fig. 4c wird die so vorbereitete Schichtenfolge mit einer Kraft F beaufschlagt. Die ausgeübte Kraft F sollte derart gewählt sein, dass das geschmolzene Lot 12, 22 verfließt und die Komponentenoberflächen ausreichend benetzt. Die Kraft liegt vorzugsweise in einem Kraftbereich zwischen 0,05 N/mm² bis 0,5 N/mm². Nach diesem Schritt, der eine gleichmäßige Benetzung der Flächen 11, 21 sicherstellt, erfolgt eine Aktivierung der Schichtenfolge 40 durch die Einbringung von optischer, elektrischer oder thermischer Energie, wodurch die Schichtenfolge 40 chemisch reagiert und aufgrund ihrer exothermen Reaktion thermische Energie zum Schmelzen des ersten und zweiten Lots 12, 22 erzeugt. Der Erwärmungsprozess und die Abkühlung erfolgen dabei so schnell, dass nur ein Teil der Lotdicke aufgeschmolzen wird und sich bei gleichmäßig dicken Lotschichten, die durch die Entfernung der Oxidschichten erzeugt werden, auch der endgültige Abstand zwischen den Teilen 10, 20 gleichmäßig einstellt.

Als Hilfsschicht kann beispielsweise, wie beschreiben, eine sog. NanoFoil verwendet werden, die aus Tausenden sog. NanoScale-Schichten aus Aluminium und Nickel besteht, welche exotherm reagieren, nachdem die Reaktion mit einem Energiepuls in Gang gesetzt wurde. Die nach Aktivierung ausgelöste thermische Reaktion dient als schnelle und kontrollierbare lokale Wärmequelle, welche die angrenzenden Lotschichten 12, 22 schmilzt und somit eine Verbindung der Komponenten erzeugt. Dieser Prozess ist unter dem Namen NanoBond bekannt. Die Wärmeerzeugung tritt dabei derart schnell auf, dass lediglich die an die Hilfsschicht 40 angrenzenden Lotschichten 12, 22 einen Wärmeeintrag erfahren.

Eine derart hergestellte Verbindung weist eine hohe Zuverlässigkeit auf. Insbesondere ist eine hohe Dimensionsstabilität gegeben, so dass sich das Verfahren insbesondere zur Erzeugung von Raumfahrtkomponenten eignet.

### BEZUGSZEICHENLISTE

- 10: erstes Teil
- 11: erste Fläche
- 12: erstes Lot
- 20: zweites Teil
- 21: zweite Fläche
- 22: zweites Lot
- 30: Einheit aus erstem und zweitem Teil
- 40: Hilfsschicht
- 42: Aktivierungsenergie
- 44: aktivierte Hilfsschicht
- 100: Dampfphasenlötvorrichtung
- 102: Behälter (aus rostfreiem Stahl)
- 104: Heizelement
- 106: chemisch inerte Flüssigkeit
- 108: erster Bereich mit kochender inerter Flüssigkeit
- 110: zweiter Bereich (primäre Dampfschicht)
- 112: dritter Bereich (sekundäre Dampfschicht)
- 300: Bearbeitungseinrichtung
- 302: Grundplatte
- 304: Deckplatte
- 306: Verbindungsstützen
- 308: Schaft
- 310: Druckplatte
- 312: Feder
- 314: Feststellvorrichtung
- 316: Eingriffselement

## Patentansprüche

1. Verfahren zum Verbinden eines ersten Teils (10) aus einem schwer lötbaren Material, insbesondere einer Keramik, einer Glaskeramik oder einem Glas, mit einem zweiten Teil (20), bei dem die folgenden Schritte durchgeführt werden:
a) Benetzung einer mit dem zweiten Teil (20) zu verbindenden, ersten Fläche (11) des ersten Teils (10) mit einem ersten Lot (12) und Verbindung des ersten Lots (12) mit der ersten Fläche des ersten Teils (10) durch Einbringung von Wärme und Ultraschallenergie;
b) Benetzung einer mit dem ersten Teil (10) zu verbindenden, zweiten Fläche (21) des zweiten Teils (20) mit einem zweiten Lot (22);
d) Herstellen einer Verbindung der mit dem ersten Lot (12) benetzten ersten Fläche (11) des ersten Teils (10) und der mit dem zweiten Lot (22) benetzten zweiten Fläche (21) des zweiten Teils (20) durch Inkontaktbringen der ersten und der zweiten Fläche (11, 21) zu einer Einheit (30);
e) Durchführen eines Temperaturschritts, bei dem die Einheit (30) einer Temperatur innerhalb eines vorgegebenen Temperaturbereichs, der eine untere Grenztemperatur und eine obere Grenztemperatur aufweist, ausgesetzt wird, wobei die obere Grenztemperatur kleiner als 800°C ist;
**dadurch gekennzeichnet, dass**
das Verfahren als Schritt c) umfasst:
Bearbeitung der mit dem zweiten Lot (22) zu verbindenden Oberfläche des ersten Lots (12) zur Entfernung einer in Schritt a) erzeugten Oxidschicht;
in Schritt d) zum Herstellen der Verbindung die erste Fläche (11) des ersten Teils (10) und die zweite Fläche (21) des zweiten Teils (10, 20) planparallel zueinander ausgerichtet werden, bevor die erste und die zweite Fläche (11, 21) mit einer Kraft in einem vorgegebenen Kraftbereich gegeneinander gedrückt werden; und
zwischen die erste und die zweite Fläche (11, 21) ein duktiles Material als Abstandshalter eingebracht wird, durch den ein vorgegebener Abstand zwischen der ersten und der zweiten Fläche nach dem Erkalten des ersten und des zweiten Lots erzeugt wird.

2. Verfahren nach Anspruch 1, bei dem in Schritt c) zusätzlich eine Bearbeitung der mit dem ersten Lot (12) zu verbindenden Oberfläche des zweiten Lots (22) zur Entfernung einer in Schritt b) erzeugten Oxidschicht durchgeführt wird.

3. Verfahren nach Anspruch 1 oder 2, bei dem als zweites Teil (20) ein Teil aus einem schwer lötbaren Material, insbesondere einer Keramik, einer Glaskeramik oder einem Glas, bereitgestellt wird, wobei in Schritt b) eine Verbindung des zweiten Lots (22) mit der zweiten Fläche des zweiten Teils (20) durch Einbringung von Wärme und Ultraschallenergie erfolgt.

4. Verfahren nach einem der vorhergehenden Ansprüche, bei dem die Bearbeitung der jeweiligen Oberfläche des ersten und/oder zweiten Lots (12,22) zur Entfernung der in Schritt a) und/oder b) erzeugten Oxidschicht durch Schleifen oder Fräsen erfolgt.

5. Verfahren nach einem der vorhergehenden Ansprüche, bei dem als erstes und/oder als zweites Lot (12, 22) ein Lot verwendet wird, das Anteile von einem oder mehreren Seltenerdemetallen enthält.

6. Verfahren nach einem der vorhergehenden Ansprüche, bei dem Schritt a), und optional Schritt b), mit Temperaturen von weniger als 300°C, insbesondere weniger als 260°C, und weiter bevorzugt weniger als 200°C durchgeführt wird.

7. Verfahren nach einem der vorhergehenden Ansprüche, bei dem in Schritt a), und optional b), das erste, und optional, das zweite, Lot (12, 22) auf der ersten bzw. zweiten Fläche (11, 21) geschmolzen wird und das geschmolzene Lot (12, 22) zur Adhäsion mit dem Material des ersten bzw. zweiten Teils gebracht wird, wobei Oxidschichten durch Ultraschall auf der ersten bzw. zweiten Fläche (11, 21) entfernt werden.

8. Verfahren nach einem der vorhergehenden Ansprüche, wobei der vorgegebene Kraftbereich 0,05 N/mm² bis 0,5 N/mm² umfasst.

9. Verfahren nach einem der vorhergehenden Ansprüche, wobei der vorgegebene Abstand zwischen 0,1mm bis 0,3 mm misst.

10. Verfahren nach einem der Ansprüche 1 bis 9, bei dem in Schritt e) der Schritt des Dampfphasenlötens durchgeführt wird.

11. Verfahren nach einem der Ansprüche 1 bis 9, bei dem in Schritt e) die erste und die zweite Fläche (11, 21) lokal der Temperatur ausgesetzt werden.

12. Verfahren nach Anspruch 11, bei dem in Schritt c1), der nach Schritt c) und vor Schritt d) durchgeführt wird, eine reaktive Hilfsschicht (40), die nach einer gesteuerten Aktivierung eine sich selbsterhaltende exotherme Reaktion erfährt, zwischen die erste und die zweite Fläche (11, 21) eingebracht wird, so dass in Schritt d) die erste und die zweite Fläche (11, 21) mit der Hilfsschicht (40) verbunden werden.

13. Verfahren nach Anspruch 11 oder 12, bei dem in Schritt e) eine Aktivierung der Hilfsschicht (40) durch Einbringung von Energie erfolgt, wodurch Materialien der Hilfsschicht (40) chemisch reagieren und aufgrund ihrer Reaktion thermische Energie zum Schmelzen des ersten und des zweiten Lots (12, 22) erzeugt wird.

14. Verfahren nach Anspruch 13, bei dem die Aktivierung optisch, elektrisch oder thermisch erfolgt.

15. Verfahren nach einem der Ansprüche 11 bis 14, bei dem die Hilfsschicht (40) als erstes Material Aluminium und als zweites Material Nickel umfasst.

16. Verfahren nach einem der Ansprüche 11 bis 15, bei dem als Hilfsschicht (40) NanoFoil verwendet wird.

## Claims

1. Method for connecting a first part (10) composed of a material that is difficult to solder, in particular a ceramic, a glass ceramic or a glass, with a second part (20), wherein the following steps are performed:
a) wetting of a first surface (11) of the first part (10), to be connected with the second part (20), with a first solder (12), and connecting the first solder (12) with the first surface of the first part (10) by introducing heat and ultrasound energy;
b) wetting of a second surface (21) of the second part (20), to be connected with the first part (10), with a second solder (22);
d) producing a connection of the first surface (11) of the first part (10), wetted with the first solder (12), and of the second surface (21) of the second part (20), wetted with the second solder (22), by bringing the first and the second surface (11, 21) into contact with one another to form a unit (30);
e) performing a temperature step in which the unit (30) is exposed to a temperature within a predetermined temperature range, which has a lower temperature limit and an upper temperature limit, wherein the upper temperature limit is less than 800°C.
**characterized in that**
the method comprises as step c):
machining of the surface of the first solder (12), to be connected with the second solder (22), for removal of an oxide layer produced in step a);
in step d), for producing the connection, the first surface (11) of the first part (10) and the second surface (21) of the second part (10, 20) are oriented plane-parallel to one another before the first and the second surface (11, 21) are pressed against one another with a force in a predetermined force range; and
a ductile material is introduced between the first and the second surface (11, 21) as a spacer, by means of which a predetermined distance between the first and the second surface is produced after solidification of the first and the second solder.

2. The method according to claim 1, wherein in step c), machining of the surface of the second solder (22), to be connected with the first solder (12), is additionally performed for removal of an oxide layer produced in step b).

3. The method according to claim 1 or 2, wherein a part composed of a material that is difficult to solder, in particular a ceramic, a glass ceramic or a glass, is provided as the second part (20), wherein in step b), a connection of the second solder (22) with the second surface of the second part (20) takes place by introducing heat and ultrasound energy.

4. The method according to any one of the preceding claims, wherein the machining of the respective surfaces of the first and/or the second solder (12, 22) for removal of the oxide layer produced in step a) and/or b) takes place by means of grinding or milling.

5. The method according to any one of the preceding claims, wherein a solder that contains components of one or more rare earth metals is used as the first and/or the second solder (12, 22).

6. The method according to any one of the preceding claims, wherein step a) and optionally step b) is carried out at temperatures of less than 300°C, in particular less than 260°C, further preferred less than 200°C.

7. The method according to any one of the preceding, wherein in step a) and optionally b) the first and optionally the second solder (12, 22) is melted on the first and the second surface (11, 21), respectively, and the melted solder (12, 22) is brought into adhesion with the material of the first part, wherein oxide layers on the first and the second surface (11, 21), respectively, are removed by means of ultrasound.

8. The method according to any one of the preceding claims, wherein the predetermined force range is 0.05 N/mm² to 0.5 N/mm².

9. The method according to any one of the preceding claims, wherein the predetermined distance is in the range of between 0.1 mm and 0.3 mm.

10. The method according to any one of claims 1 to 9, wherein in step e), the step of vapor phase soldering is carried out.

11. The method according to any one of claims 1 to 9, wherein in step e), the first and the second surface (11, 21) are locally exposed to the temperature.

12. The method according to claim 11, wherein in a step c1), which is carried out after step c) and before step d), a reactive auxiliary layer (40), which experiences a self-maintaining exothermic reaction after controlled activation, is introduced between the first and the second surface (11, 21), so that in step d), the first and the second surface (11, 21) are connected with the auxiliary layer (40).

13. The method according to claim 11 or 12, wherein in step e), activation of the auxiliary layer (40) by introducing energy takes place, thereby causing materials of the auxiliary layer (40) to react chemically and, on the basis of their reaction, thermal energy for melting the first and the second solder (12, 22) is generated.

14. The method according to claim 13, wherein the activation takes place one of optically, electrically or thermally.

15. The method according to any one of claims 11 to 14, wherein the auxiliary layer (40) comprises aluminum as the first material and nickel as the second material.

16. The method according to any one of claims 11 to 15, wherein NanoFoil is used as the auxiliary layer (40).

## Revendications

1. Procédé d'assemblage entre une première pièce (10) réalisée à partir d'un matériau difficile à braser, notamment en céramique, vitrocéramique ou verre, et une deuxième pièce (20) moyennant la mise en oeuvre des étapes suivantes :
a) le mouillage d'une première brasure (12) sur une première surface (11) de la première pièce (10) à relier à la deuxième pièce (20), et l'assemblage entre la première brasure (12) et la première surface de la première pièce (10) par apport de chaleur et d'énergie ultrasonique,
b) le mouillage d'une deuxième brasure (22) sur une deuxième surface (21) de la deuxième pièce (20) à relier à la première pièce (10),
d) la réalisation de l'assemblage entre la première surface (11) de la première pièce (10) mouillée par la première brasure (12) et la deuxième surface (21) de la deuxième pièce (20) mouillée par la deuxième brasure (22) par mise en contact de la première et de la deuxième surface (11, 21) pour former une unité (30),
e) la mise en oeuvre d'une étape thermique dans le cadre de laquelle ladite unité (30) subit une température comprise dans une plage de températures prédéfinie constituée par une température limite inférieure et une température limite supérieure, la température limite supérieure étant inférieure à 800° C,
**caractérisé en ce que**
l'étape c) du procédé consiste
à traiter la surface de la première brasure (12) à relier à la deuxième brasure (22) afin d'éliminer une couche d'oxyde produite à l'étape a),
à l'étape d) permettant de réaliser l'assemblage, la première surface (11) de la première pièce (10) et la deuxième surface (21) de la deuxième pièce (10, 20) sont orientées l'une par rapport à l'autre dans un plan parallèle avant que la première et la deuxième surface (11, 21) soient pressées l'une contre l'autre avec une force comprise dans une plage de forces de compression prédéfinie, et **en ce qu'**on place entre la première et la deuxième surface (11, 21) un matériau ductile comme élément d'espacement en vue de maintenir un espacement entre la première et la deuxième surface après refroidissement de la première et de la deuxième brasure.

2. Procédé selon la revendication 1, dans le cadre duquel l'étape c) consiste en outre à traiter la surface de la deuxième brasure (22) à assembler à la première brasure (12) afin d'éliminer une couche d'oxyde produite à l'étape b).

3. Procédé selon la revendication 1 ou 2, dans le cadre duquel on utilise comme deuxième pièce (20) une pièce réalisée à partir d'un matériau difficile à braser, notamment en céramique, vitrocéramique ou verre, l'étape b) consistant à assembler la deuxième brasure (22) et la deuxième surface de la deuxième pièce (20) par apport de chaleur et d'énergie ultrasonique.

4. Procédé selon l'une des revendications précédentes, dans le cadre duquel le traitement de la surface respective de la première et/ou de la deuxième brasure (12, 22) afin d'éliminer de la couche d'oxyde produite à l'étape a) et/ou b) est effectué par meulage ou par fraisage.

5. Procédé selon l'une des revendications précédentes, dans le cadre duquel la brasure utilisée comme première et/ou deuxième brasure (12, 22) est une brasure contenant des fractions d'un ou de plusieurs métaux du groupe des terres rares.

6. Procédé selon l'une des revendications précédentes, dans le cadre duquel l'étape a), et optionnellement l'étape b), sont réalisées à des températures inférieures à 300°C, plus particulièrement inférieures à 260°C, et de préférence encore inférieures à 200°C.

7. Procédé selon l'une des revendications précédentes, dans le cadre duquel à l'étape a), et optionnellement à l'étape b), la première et optionnellement la deuxième brasure (12, 22) sont fondues sur la première et sur la deuxième surface (11, 21) et ces brasures (12, 22) fondues sont amenées à adhérer au matériau de la première et de la deuxième pièce, les couches d'oxyde sur la première et sur la deuxième surface (11, 21) étant éliminées par ultrasons.

8. Procédé selon l'une des revendications précédentes, dans le cadre duquel la plage des forces de compression prédéfinie se situe entre 0,05 N/mm² et 0,5 N/mm².

9. Procédé selon l'une des revendications précédentes, dans le cadre duquel l'espacement prédéfini est compris entre 0,1 mm et 0,3 mm.

10. Procédé selon l'une des revendications 1 à 9, dans le cadre duquel l'étape e) est l'étape où s'effectue le brasage en phase vapeur.

11. Procédé selon l'une des revendications 1 à 9, dans le cadre duquel à l'étape e), la première et la deuxième surface (11, 21) sont localement soumises à une température.

12. Procédé selon la revendication 11, dans le cadre duquel l'étape c1), qui est exécutée après l'étape c) et avant l'étape d), consiste à appliquer entre la première et la deuxième surface (11, 21) une couche auxiliaire (40) réactive qui, suite à une activation contrôlée, subit une réaction exothermique auto-entretenue de sorte qu'à l'étape d), la première et la deuxième surface (11, 21) se trouvent reliées à la couche auxiliaire (40).

13. Procédé selon la revendication 11 ou 12, dans le cadre duquel on procède à l'étape e) à une activation de la couche auxiliaire par apport d'énergie ce qui fait réagir chimiquement les matériaux de la couche auxiliaire (40) et produit de l'énergie thermique issue de cette réaction afin de faire fondre la première et la deuxième brasure (12, 22).

14. Procédé selon la revendication 13, dans le cadre duquel cette activation est effectuée optiquement, électriquement ou thermiquement.

15. Procédé selon l'une des revendications 11 à 14, dans le cadre duquel la couche auxiliaire (40) contient de l'aluminium comme premier et du nickel comme second matériau.

16. Procédé selon l'une des revendications 11 à 15, dans le cadre duquel on utilise une nanofeuille en tant que couche auxiliaire.
